# EUROPEAN PATENT APPLICATION

(11) **EP 2 282 479 A1**
(43) Date of publication of application: **09.02.2011**
(21) Application number: 09166281.7
(22) Date of filing: 23.07.2009
(51) Int. Cl.: H04L 29/08

(54) **Controlling peer-to-peer programs**

(71) Applicant: Net Transmit & Receive, S.L., 08019 Barcelona (ES)
(72) Inventor: Casanovas, David Llort, Barcelona (ES); Prieto, Joan Pons, Barcelona (ES)
(74) Representative: O'Connell, David Christopher

(57) **Abstract**

In order to provide flexible yet effective control on the use of peer-to-peer programs (28) on a computer (22) in a local area network (12), steps are taken to count a number of open connections established by each program, with addresses outside the local area network. When the counted number of open connections exceeds a threshold number, action can be taken to restrict use of the program.

## Description

This invention relates to a method of controlling the operation of a computer system, and in particular to a method of controlling the running of peer-to-peer programs on computers.

There are a large number of peer-to-peer (P2P) programs written that exchange information directly between themselves over a network that may include the internet. Such programs may transfer files, provide Voice over IP (VoIP) services or otherwise consume large amounts of bandwidth. These programs are designed in such a way that there is no single point where a large amount of bandwidth is needed, as the only central point is a location service that identifies one or more peers that must be contacted to obtain the information required. Examples of peer-to-peer (P2P) programs include Session Information Protocol (SIP) clients, messaging programs such as Skype™, peer-to-peer file sharing programs such as BitTorrent client software, and video sharing programs such as Kontiki™ software.

When these programs are run on a computer, they consume bandwidth on the network to which the computer is connected. By their very nature, the programs use this bandwidth to share data with other peers, as well as to obtain information from one or more peers for the user of the computer. In many circumstances, these programs run unseen in the background even when they are not actually being used by the user of the computer. Within many businesses, the use of such programs is generally not welcome, as the programs are relatively seldom used in any legitimate business activity.

There is therefore a need to be able to control the usage of such programs, in particular in an enterprise environment.

US Patent No. 6,671,724 (Pandya et al) and US-A-2004/0153545 (Pandya et al) describe ways of managing bandwidth on a network using agents running on every computer in the network. Each agent module is configured to obtain an allocation of bandwidth usable by that computer. In US-A-2004/0153545, the agent module is further configured to sub-allocate such allocation to components within it. The allocation of bandwidth is managed from a web interface (Figs 13 - 16) that allows an administrator to specify bandwidth policies. The problem with the mechanism described in these documents is that specifying the policies is an onerous task. In order to use this mechanism to restrict the use of peer-to-peer programs on the computers in a local area network, one would have to write policies for all known peer-to-peer programs, and keep this list up to date as new programs appear. Even then, users could circumvent the policy simply by giving the program a new name.

There exist mechanisms that attempt to stop peer-to-peer programs by means of a gateway system that runs on the internet gateway. Such a product may use stateful packet inspection to determine the nature of the outgoing packet, and discard those packets that match a signature table. However, there are a number of problems with this approach. The stateful packet inspection is expensive and often needs specialist hardware to achieve acceptable throughput, and the approach simply stops P2P traffic rather than controlling it. Most importantly, the gateway needs an up-to-date knowledge of the relevant packet signatures. A new version of any P2P protocol means that the mechanism is unable to stop the use of the P2P program until a new signature table is available.

The present invention seeks to provide a mechanism that allows reliable, yet flexible, control over the use of peer-to-peer programs.

According to a first aspect of the present invention, there is provided a method of controlling the operation of a computer in a local area network, the method comprising:
for at least one program running on the computer, counting a number of open connections with addresses outside the local area network; and
when the counted number of open connections exceeds a threshold number, taking action to restrict use of the program.

According to a second aspect of the present invention, there is provided a computer program product, comprising code operable, in use, to perform the method according to the first aspect of the invention.

According to a third aspect of the present invention, there is provided a computer system, comprising:
a computer, in a local area network, having a connection to a wide area network, wherein the computer is configured:
   for at least one program running on the computer, to count a number of open connections with addresses outside the local area network; and
   when the counted number of open connections exceeds a threshold number, to take action to restrict use of the program.

For a better understanding of the present invention, and to show how it may be put into effect, reference will now be made, by way of example, to the accompanying drawings, in which:-
Figure 1 illustrates a computer system in accordance with an aspect of the invention; and
Figure 2 is a flow chart illustrating a method performed in a part of the computer system of Figure 1.

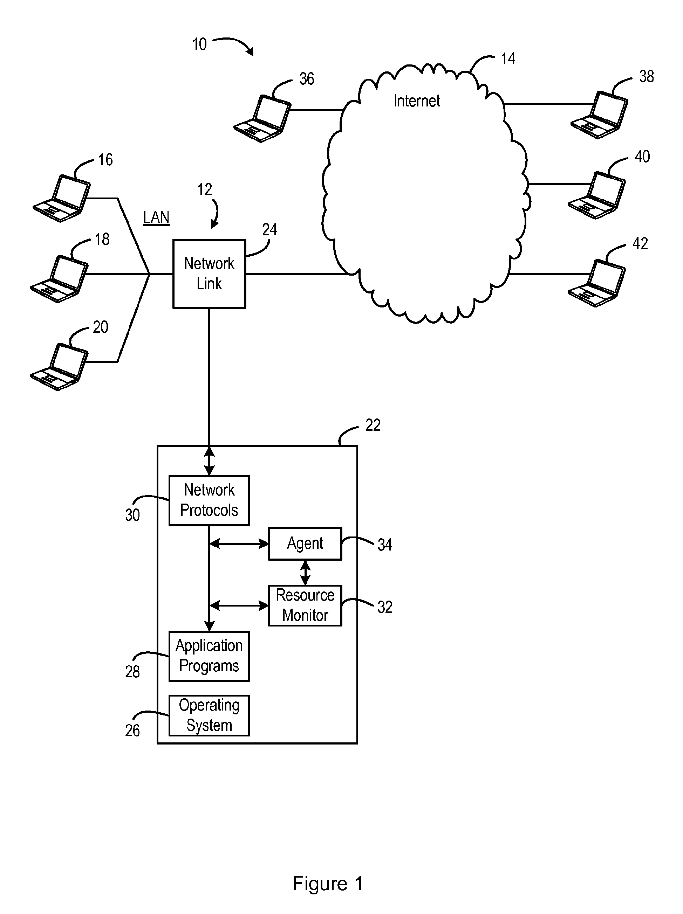

Figure 1 shows an example of a part of a networked computer system 10. It will be appreciated that Figure 1 illustrates the relevant components only to the limited extent necessary for an understanding of the present invention. Specifically, Figure 1 shows a part of a local area network (LAN) 12 that has a connection to the internet 14.

The local area network 12 includes a number of computers 16, 18, 20, 22, which may be laptop computers, PCs, or the like, and may have wired or wireless connections, as will be recognized. The computers 16, 18, 20, 22 are connected to the internet 14 through a network link 24. As is common, the local area network 12 as a whole is operated and managed by an enterprise, while the individual computers 16, 18, 20, 22 are used by individual users within the enterprise.

Figure 1 shows in slightly more detail the computer 22, this being representative of the other computers 16, 18, 20 connected to the local area network 12. Specifically, Figure 1 shows in representative form a part of the software running on the computer 22. The following description can be applied to any of the computers connected to the local area network 12, or at least to computer that is not acting as a server. In more detail, Figure 1 shows the operating system 26, application programs 28, and network protocol software 30. The operation of this software is generally conventional, and will not be described further.

Figure 1 also shows a resource monitor 32, the operation of which will be described in more detail below, and an agent 34, which will also be described in more detail below.

Figure 1 also shows various other computers 36, 38, 40, 42 connected to the internet 14. Although these are shown as standalone computers, it will be appreciated that these too may be located within respective local area networks.

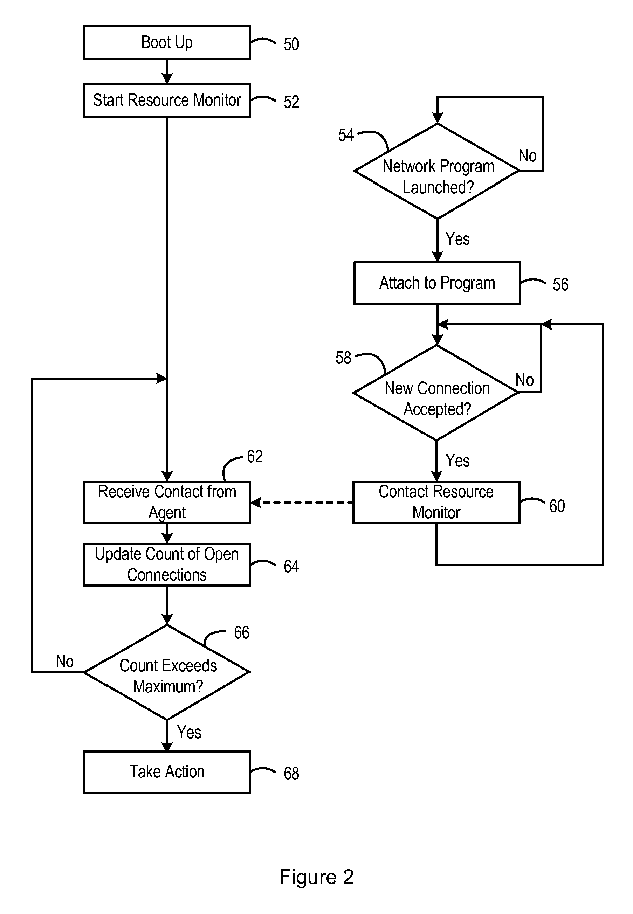

Figure 2 is a flow chart, illustrating the operation of the resource monitor 32 and the agent 34, and their interaction. In general terms, the system described here provides control over the operation of the network by identifying programs that exhibiting the nature of a peer-to-peer program, and more specifically by monitoring traffic flows into and out of the network from every process that is using the network. In the illustrated embodiment, the method uses the feature that, on a normal desktop or laptop PC, a user will download a great deal more data from the internet than they will upload. If data is uploaded, then it will typically be to a single site, for example a file transfer to an external site or an email sent to a mail server. Even voice or video traffic will be directed to a single location. As a result, a process that is transmitting information to a large number of remote computers can be safely assumed to be a peer-to-peer program. Of course, servers that are intended to be acting as public web servers, for example, will legitimately have processes that act in this way, and so are excluded from the monitoring method, either by not applying the method to such computers, or by not applying the method to the relevant programs on such computers.

In addition, a process that is downloading data via a large number of open connections will often be a peer-to-peer program. Again, however, there will be legitimate exceptions to this. For example, a web browser may perform parallel fetches of images on a page. Again, therefore, the method may not be applied to such programs.

Thus, when the computer 22 boots up in step 50, the resource monitor 32 is started in step 52.

As shown in step 54, the agent 34 determines whenever an application program is launched that uses network services from the operating system. When this occurs, the agent 34 attaches itself to the program in step 56. As described in US-6,671,724, for example with reference to Figures 6-8, an agent can attach between the program and the protocol stack supplying both UDP and TCP services. It will be appreciated that the application programs 28 running on the computer 22 may contain several programs, such as email programs, web browser programs and the like, that require network resources for their intended, legitimate, purposes. However, the application programs 28 may also include programs, such as peer-to-peer file-sharing programs, that also require network resources, but which are not intended by the operator of the local area network 12 to be used.

In step 58, the agent 34 continually detects the activity of the program to which it is attached, and more specifically determines when a new network connection of interest is accepted. For example, the agent may test for a new TCP/IP connection or a new UDP connection.

When determining whether there is a new connection of interest, the agent may test only for a new connection with a non-local IP address. That is, connections to other computers on the LAN 12 are not considered to be a problem, and so they need not be considered in this process.

It should be noted that, in step 58, the agent is able to test for connections initiated by the program, and for connections accepted by the program. In either case, the connection may be used primarily either for uplink or for downlink traffic.

When such a new connection is detected, the agent 34 contacts the resource monitor 32, as shown in step 60.

In step 62, the resource monitor 32 receives the contact from the agent 34, and in step 64 updates a count of the number of open connections accepted by the program, or initiated by the program.

It is known that some programs are designed such that they create a new copy of themselves to handle each connection. In that case, each program would in fact have only one connection. However, it remains possible to determine that the copies of the program are all related. For example, they all have the same parent process, and they often all have the same name. In that case, it is possible to recognize the cluster of programs as a single program, and to maintain an aggregate count of the number of open connections accepted by the cluster, or initiated by the cluster.

In step 66, it is determined whether the number exceeds a pre-defined maximum limit. If not, the process performed in the resource monitor 32 returns to await any further contact from the agent 34. If the counted number does exceed the pre-defined maximum limit, then the process proceeds to step 68, where the resource monitor can take suitable action.

In step 68, the resource monitor 32 can take various actions when the limit is exceeded. For example, the resource monitor 32 may be able to terminate the program 28 that is generating the connections. However, the resource monitor 32 can also receive information about allowed programs, such as web server software, such that action is not taken against such programs.

As an alternative to terminating the program, a warning may be sent to the user, notifying him that the use of the program should be stopped. As a further alternative, a message may be sent to the agent 34, requesting it to limit the network traffic, and hence limit the effects of congestion on the other users and on the other programs on the same computer, for example by inserting delays into the data transfer between the peer-to-peer program and the network, or by imposing an upper limit on the bandwidth available for use by the program.

The actions taken by the resource monitor 32 can vary, for example depending on the user, the time of day, and/or other aspects of the network status. The limits and actions to be taken can be held locally, or can be determined from a web host configured by an administrator. It is possible for the web host, or for the resource monitor 32, to dynamically decide on the actions to be taken, by taking into account the network conditions such as the current upload bandwidth or the time of day.

In addition, the actions taken by the resource monitor may depend on whether or not some additional criterion is met. For example, when it is determined that a program has multiple open connections, steps can be taken to determine the bandwidth used by those connections. In that case, the actions taken by the resource monitor may depend on this bandwidth, for example with action being taken only if the bandwidth exceeds a threshold.

There is a danger that a user of the computer 22 might attempt to disable the system. In order to prevent this, the agent 34 can be enabled to terminate its associated program with a suitable message, if it finds at step 60 that it cannot contact the resource monitor 32.

Although in this illustrative example the resource monitor 32 and the agent 34 are shown as separate components, in an alternate configuration they can be combined into a single monitoring layer.

Thus, the system described here provides control over the operation of the network in order to prevent unwanted use of peer-to-peer programs.

## Claims

1. A method of controlling the operation of a computer in a local area network, the method comprising:
for at least one program running on the computer, counting a number of open connections with addresses outside the local area network; and
when the counted number of open connections exceeds a threshold number, taking action to restrict use of the program.

2. A method as claimed in claim 1, comprising counting separately the number of open connections for each of a plurality of programs.

3. A method as claimed in claim 1, comprising counting the number of open connections for a plurality of programs having the same parent process.

4. A method as claimed in claim 1, wherein the plurality of programs having the same parent process have the same name.

5. A method as claimed in any preceding claim, wherein the action to restrict use of the program comprises terminating the program.

6. A method as claimed in any preceding claim, wherein the step of taking action to restrict use of the program comprises sending a warning to a user of the program.

7. A method as claimed in any preceding claim, wherein the step of taking action to restrict use of the program comprises imposing delays on traffic sent by the program.

8. A method as claimed in any preceding claim, wherein the step of taking action to restrict use of the program comprises limiting the bandwidth available for traffic sent or received by the program.

9. A method as claimed in any preceding claim, further comprising, when the counted number of open connections exceeds a threshold number, determining a bandwidth used by said program, and taking action to restrict use of the program if said bandwidth exceeds a threshold.

10. A computer program product, comprising code operable, in use, to perform the method as claimed in any of claims 1 to 9.

11. A computer program product as claimed in claim 10, comprising:
an agent product, comprising code operable, in use, to count the number of open connections; and
a monitor product, comprising code operable, in use, to take action to restrict use of the program.

12. A computer system, comprising:
a computer, in a local area network, having a connection to a wide area network, wherein the computer is configured:
for at least one program running on the computer, to count a number of open connections with addresses outside the local area network; and
when the counted number of open connections exceeds a threshold number, to take action to restrict use of the program.

13. A computer system as claimed in claim 12, wherein the computer comprises an agent, for counting the number of open connections; and a monitor, for taking said action to restrict use of the program.

14. A computer system as claimed in claim 12 or 13, wherein the computer is configured to maintain a single count of a number of connections for a plurality of programs having the same parent process.

15. A computer system as claimed in one of claims 12 to 14, wherein the computer is further configured, when the counted number of open connections exceeds a threshold number, to determining a bandwidth used by said program, and to take action to restrict use of the program if said bandwidth exceeds a threshold.
